# EUROPEAN PATENT APPLICATION

(11) **EP 1 475 791 A2**
(43) Date of publication of application: **10.11.2004**
(21) Application number: 04251522.1
(22) Date of filing: 17.03.2004
(51) Int. Cl.: G11B 7/09

(54) **Optical pickup lens driving apparatus**

(30) Priority: 01.05.2003 JP 2003160092; 12.12.2003 JP 2003414117; 20.02.2004 JP 2004043810
(71) Applicant: Systems Engineering Co. Ltd, Yamato-shi, Kanagawa (JP); Tokyo Den-on Co. Ltd, Tokyo (JP)
(72) Inventor: Ando, Hidetoshi, Machida-shi, Tokyo (JP)
(74) Representative: Haley, Stephen

(57) **Abstract**

An optical pickup lens driving apparatus comprises an optical pickup lens, four supporting wires which movably support a movable member, a fixing member in which the four supporting wires are supported, driving means which controls movement of the optical pickup lens by action of electromagnetic force, and a balance shaft in which one end of the balance shaft is connected to the movable member and a balance weight is provided at the other end, and a balancing middle portion of the balance shaft is oscillatably journaled in the fixing member. The optical pickup lens driving apparatus has a simple structure and improves performance of reading information or recording information.

## Description

The present invention relates to an optical pickup lens driving apparatus which reads information recorded on a recording medium and records the information.

### Background Art

For example, as described in Japanese Patent Laid-Open Publication No. H10-21562, there is the optical pickup lens driving apparatus, which reads information recorded on a recording medium or records the information in such a manner that a movable member mounting an optical pickup lens is movably supported by four supporting wires and movement of the optical pickup lens included in the movable member is controlled by action of electromagnetic force generated with a permanent magnet and a driving coil.

In DVD, MO, HDD, or the like, it is expected that performance will be dramatically improvedfor a high-density recordingmedium corresponding to the recording medium having a large capacity which is developed in the near future. In recent years, DVD, MO, HDD, or the like has been used in an optical-related field such as a cellular phone and an electronic camera.

When a secondary resonance point of a frequency characteristic can not be set to a frequency not lower than, for example,10KHz, since the optical pickup lens driving apparatus which reads information recorded on a recording medium or records the information can not be used, the emphasis is placed on reduction of a weight of a movable lens portion and a structure having small inertia force, and not lower than 90 percent of the current optical pickup lens driving apparatuses adopt the four-wire type using the four supporting wires.

Continuity of data is secured against external impact by using a G sensor, an auxiliary semiconductor memory, or the like. And a rubber vibration insulator or the like is used for extremely weak vibration.

In the conventional four-wire type optical pickup lens driving apparatus, there is a problem that a structure is complicated in the optical pickup lens driving apparatus in which the continuity of data is secured as a countermeasure against external vibration and impact by using the G sensor and the auxiliary semiconductor memory, and there is also the problem that vibration absorption effect is not sufficiently obtained in the optical pickup lens driving apparatus in which a rubber vibration insulator or the like is used for extremely weak vibration. Therefore, it is difficult to read the information recorded in the high-density recording medium or record the information. When the high-density recording medium is used in the optical pickup lens driving apparatus, in addition to focusing control and tracking control, it is necessary to add function of controlling tilt and yawing to the optical pickup lens driving apparatus, and a vibration-resistant mechanism is also required.

In view of the foregoing, it is an object of the invention to provide the optical pickup lens driving apparatus which has a simple structure and improves performance of reading information or recording information.

In order to solve the above problems and to achieve the above object, the invention is constituted as follows:

A first aspect of the invention is an optical pickup lens driving apparatus comprising an optical pickup lens, four supporting wires which movably support a movable member, a fixing member in which the four supporting wires are supported, driving means which controls movement of the optical pickup lens by action of electromagnetic force, a balance shaft in which one end of the balance shaft is connected to the movable member, a balance weight is provided at the other end, and a balancing middle portion of the balance shaft is oscillatably journaled in the fixing member, wherein the optical pickup lens is mounted on the movable member.

A second aspect of the invention is an optical pickup lens driving apparatus comprising an optical pickup lens, four supporting wires which movably support a movable member, a fixing member in which the four supporting wires are supported, driving means which controls movement of the optical pickup lens by action of electromagnetic force, a balance shaft in which one end of the balance shaft is connected to the movable member, a balance weight is provided at the other end, and a balancing middle portion of the balance shaft is oscillatably journaled in the fixing member, wherein the optical pickup lens is mounted on the balance shaft.

In the first aspect and second aspect of the invention, the optical pickup lens driving apparatus is characterized in that the driving means has a permanent magnet and a driving coil which generate the electromagnetic force, the permanent magnet is provided on a fixing side, and the driving coil is provided in the movable member.

In the first aspect and second aspect of the invention, the optical pickup lens driving apparatus is characterized in that the driving means has a permanent magnet and a driving coil which generate the electromagnetic force, the permanent magnet is provided on a fixing side, and the driving coil is provided in the balance shaft.

In the first aspect and second aspect of the invention, the optical pickup lens driving apparatus further comprises a permanent magnet which is provided in the balance weight of the balance shaft and fine adjustment means which is provided opposite to the permanent magnet, and the fine adjustment means controls the movement of the optical pickup lens in focusing, tracking, tilt, and yawing directions.

In the first aspect and second aspect of the invention, the optical pickup lens driving apparatus is characterized in that the balance shaft is oscillatably journaled in the fixing member by a gimbal mechanism.

A third aspect of the invention is an optical pickup lens driving apparatus comprising an optical pickup lens, a movable member mounting an optical pickup lens, four supporting wires which movably supports a movable member, a fixing member in which the four supporting wires are supported, a balance shaft in which one end of the balance shaft is connected to the movable member, a balance weight is provided at the other end, and a balancing middle portion of the balance shaft is oscillatably journaled in the fixing member, and driving means which controls movement of the optical pickup lens through the balance shaft by action of electromagnetic force.

In the third aspect of the invention, the optical pickup lens driving apparatus is characterized in that the driving means includes a permanent magnet which is provided in the balance weight of the balance shaft and a driving coil which is provided in the fixing member while the driving coil is opposite to the permanent magnet.

In the third aspect of the invention, the optical pickup lens driving apparatus is characterized in that the balance shaft is oscillatably journaled in the fixing member by a gimbal mechanism.

In the first to third aspect of the invention, the optical pickup lens driving apparatus is characterized in that one end of the balance shaft is supported by the movable member via a bearing. An oscillation of the movable member can be performed in such a manner that the movable member is restricted movement thereof around the balance shaft by the bearing.

A fourth aspect of the invention is an optical pickup lens driving apparatus comprising an optical pickup lens, a plurality of driving control units which control movement of the optical pickup lens, the plurality of driving control units being arranged about the optical pickup lens at an equal angle, and a balance shaft which is included in each of the plurality of driving control units, one end of the balance shaft being connected to a side of the optical pickup lens, a balance weight being provided at the other end of the balance shaft, and a balancing middle portion of the balance shaft being oscillatably journaled in said fixing member.

In the forth aspect of the invention, the optical pickup lens driving apparatus is characterized in that one end of the balance shaft is supported by the optical pickup lens via the bearing. An oscillation of the side of the optical pickup lens can be performed in such a manner that the movable member is restricted movement thereof around the balance shaft by the bearing.

The invention has the following advantages by the above constitutions.

According to the first aspect of the invention, the performance of reading information or recording information can be improved with a simple structure in which moment of inertia caused by external vibration and impact is balanced by the balance shaft, in such a manner that the optical pickup lens driving apparatus comprises the balance shaft in which one end of the balance shaft is connected to the movable member, the balance weight is provided at the other end, and the balancing middle portion of the balance shaft is oscillatably journaled in the fixing member though a gimbal type bearing, and the optical pickup lens is mounted on the movable member.

According to the second aspect of the invention, the performance of reading information or recording information can be improved with a simple structure in which the moment of inertia caused by the external vibration and impact is balanced by the balance shaft, in such a manner that the optical pickup lens driving apparatus comprises the balance shaft in which one end of the balance shaft is connected to the movable member, the balance weight is provided at the other end, and the balancing middle portion of the balance shaft is oscillatably journaled in the fixing member though the gimbal type bearing, and the optical pickup lens is mounted on the balance shaft.

In the first aspect and the second aspect of the invention, the movement of the optical pickup lens can be controlled on the side of the movable member by the action of the electromagnetic force in such a manner that the permanent magnet is provided on the fixing side and the driving coil is provided in the movable member.

In the first aspect and the second aspect of the invention, the movement of the optical pickup lens can be controlled on the side of the balance shaft by the action of the electromagnetic force in such a manner that the permanent magnet is provided on the fixing side and the driving coil is provided in the balance shaft.

In the first aspect and the second aspect of the invention, the movement of the optical pickup lens can be controlled more accurately in such a manner that the optical pickup lens driving apparatus further comprises the fine adjustment means which controls the movement of the optical pickup lens in focusing, tracking, tilt, and yawing directions through the balance shaft by the action of the electromagnetic force.

In the first aspect and the second aspect of the invention, resistance to oscillation of the balance shaft is small and highly accurate balance can be performed in such a manner that the balance shaft is oscillatably journaled in the fixingmember by the gimbal mechanism.

According to the third aspect of the invention, the moment of inertia caused by the external vibration and impact can be balanced by the balance shaft in such a manner that the optical pickup lens driving apparatus comprises the driving means which controls the movement of the optical pickup lens through the balance shaft by the action of the electromagnetic force, and the performance of reading information or recording information can be improved with the simple structure by controlling the movement of the optical pickup lens through the balance shaft.

In the third aspect of the invention, the movement of the optical pickup lens can be controlled on the side of the balance shaft by the action of the electromagnetic force in such a manner that the driving means has the simple structure including the permanent magnet and the driving coil.

In the third aspect of the invention, the resistance to oscillation of the balance shaft is small and the highly accurate balance can be performed in such a manner that the balance shaft is oscillatably journaled in the fixing member by the gimbal mechanism.

In the first to third aspect of the invention, the movement of the optical pickup lens driving apparatus could be controlled in a high accurate in such a manner that the one side of the balance shaft is supported by the movable member via the bearing so that the movable member can oscillate freely. An oscillation of the movable member can be performed in such a manner that the movable member is restricted movement thereof around the balance shaft by the bearing, the movement of the optical pickup lens could be controlled in a high accurate and the moment of inertia caused by the external vibration and impact can be balanced by the balance shaft.

According to the fourth aspect of the invention, the moment of inertia caused by the external vibration and impact can be balanced in such a manner that the plurality of driving control units are arranged about the optical pickup lens at an equal angle, the movement of the optical pickup lens is controlled by the plurality of driving control units, and each of the plurality of driving control units includes the balance shaft. Therefore, the performance of reading information or recording information can be improved with the simple structure.

In the forth aspect of the invention, the movement of a side of the optical pickup lens driving apparatus could be controlled in a high accurate in such a manner that one side of the balance shaft is supported by the side of the optical pickup lens via the bearing so that the optical pickup lens can oscillate freely. An oscillation of the side of the optical pickup lens can be performed in such a manner that the side of the optical pickup lens is restricted movement thereof around the balance shaft by the bearing, the movement of the side of the optical pickup lens could be controlled in a high accurate and the moment of inertia caused by the external vibration and impact can be balanced by the balance shaft.

In the Drawings;
Fig. 1 is a plan view of an optical pickup lens driving apparatus of a first embodiment;
Fig. 2 is a side view of the optical pickup lens driving apparatus of the first embodiment;
Fig. 3 is a sectional view showing a gimbal mechanism;
Fig. 4 is a sectional view taken on line IV-IV of Fig. 3;
Fig. 5 is a plan view showing a balance shaft is connected to a movable member;
Fig. 6 is a view from a side of the movable member showing the balance shaft is connected to the movable member;
Fig. 7 is a plan view of the optical pickup lens driving apparatus of a second embodiment;
Fig. 8 is a plan view of the optical pickup lens driving apparatus of a third embodiment;
Fig. 9 is a plan view of the optical pickup lens driving apparatus of a fourth embodiment;
Fig. 10 is a plan view of the optical pickup lens driving apparatus of a fifth embodiment;
Fig. 11 is a side view of the optical pickup lens driving apparatus of the fifth embodiment;
Fig. 12 is a view illustrating driving power and tilt/yawing;
Fig. 13 is a plan view of the optical pickup lens driving apparatus of a sixth embodiment;
Fig. 14 is a schematic view showing an embodiment in which two driving control units are arranged about an optical pickup lens at an angle of 180 degrees; and
Fig. 15 is a schematic view showing an embodiment in which three driving control units are arranged about the optical pickup lens at an angle of 120 degrees.

### Best Mode for Carrying Out the Invention

Referring to the accompanying drawings, preferred embodiments of the optical pickup lens driving apparatus according to the invention will be described below. Needless to say, the invention is not limited to the embodiments described below. The embodiments of the invention show the most preferable mode of the invention, and the terms of the invention are not limited to those used in the invention.

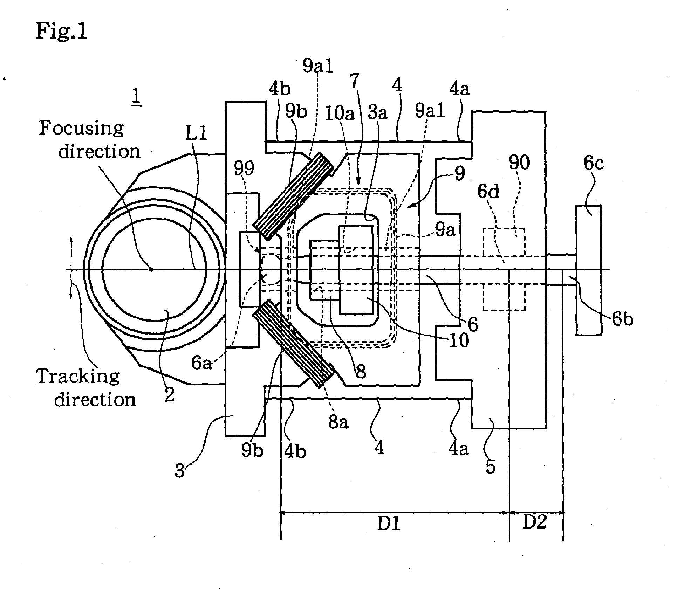

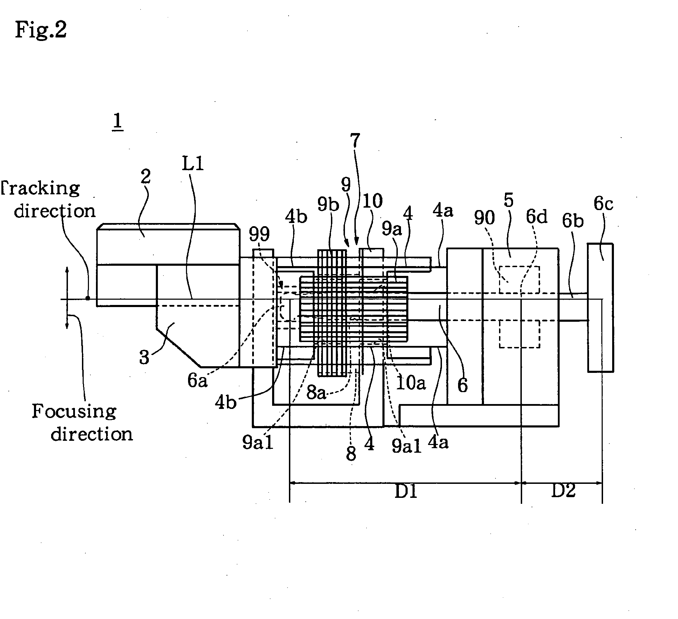

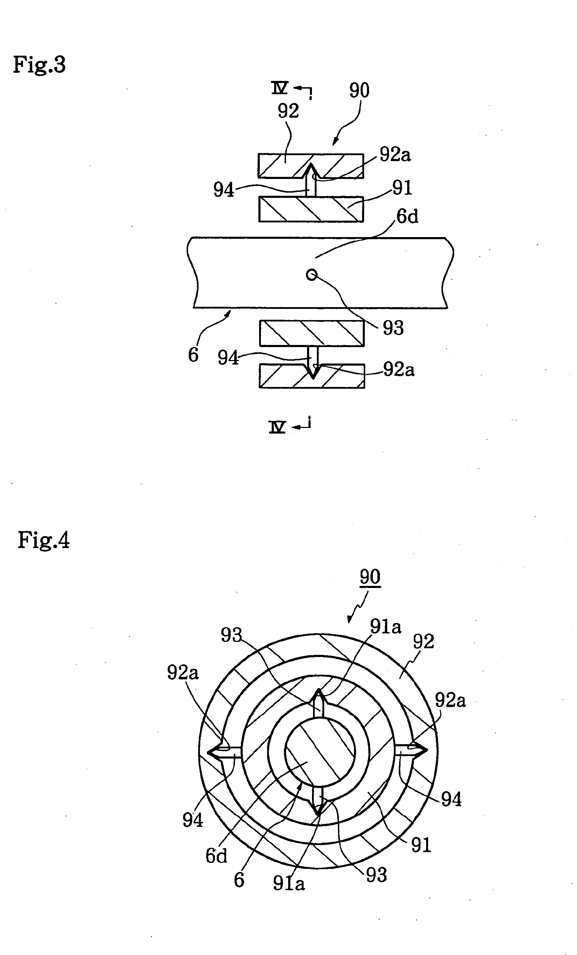

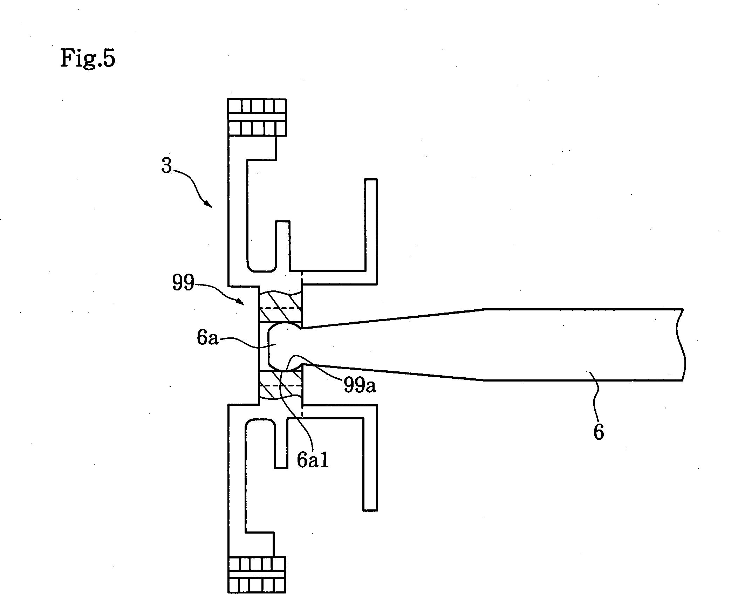

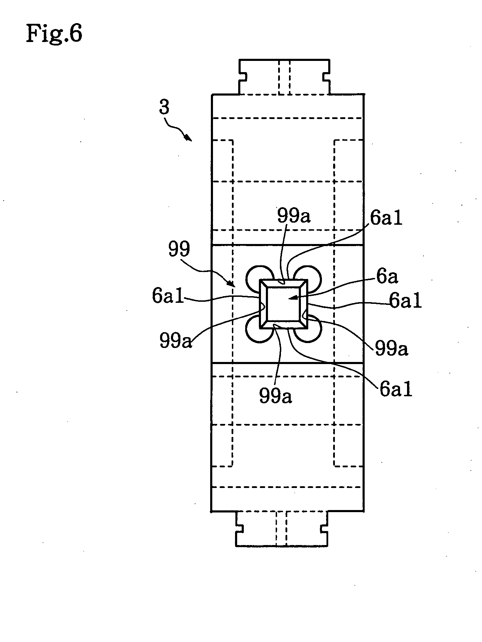

A first embodiment of the invention will be described . referring to Figs. 1 to 4. Fig. 1 is a plan view of the optical pickup lens driving apparatus, Fig. 2 is a side view of the optical pickup lens driving apparatus, Fig. 3 is a sectional view showing the gimbal mechanism, and Fig. 4 is a sectional view taken on line IV-IV of Fig. 3. Fig. 5 is a plan view showing a balance shaft is connected to a movable member and Fig. 6 is a view from a side of the movable member showing the balance shaft is connected to the movable member.

An optical pickup lens driving apparatus 1 of the embodiment includes an optical pickup lens 2, a movable member 3, four supporting wires 4, a fixing member 5, a balance shaft 6, and driving means 7. The optical pickup lens 2 reads the information recorded on the recording medium and records the information. The optical pickup lens 2 is mounted on the movable member 3.

The movable member 3 is movably supported by the four supporting wires 4. Each two of the four supporting wires 4 are arranged at upper and lower portions, and each of the two supporting wires 4 is arranged at the same vertical position on right and left sides. Bases 4a of the supporting wires 4 are fixed to the fixing member 5, and front ends 4b are fixed to the movable member 3. The four supporting wires 4 support the movable member 3 so that parallel translation of the movable member 3 can be performed.

The driving means 7 has a permanent magnet 8 and a driving coil 9. The driving means 7 controls the movement of the optical pickup lens 2 in the focusing direction and the tracking direction by the action of the electromagnetic force. In the embodiment, the longpermanent magnet 8 is provided along one side of a U-shaped iron core 10, the iron core 10 is fixed to a base or the like, and the iron core 10 is arranged in an opening 3a of the movable member 3 as shown in Fig. 1.

The driving coil 9 has a focusing driving coil 9a and a pair of tracking driving coils 9b. The focusing driving coil 9a is wound around the movable member 3 along a lengthwise direction of the permanent magnet 8 so that the permanent magnet 8 is located in the center of the focusing driving coil 9a. The optical pickup lens 2 can be moved in the focusing direction through the movable member 3 by feeding current through the focusing driving coil 9a, and the moving direction can be changed by changing the direction of the flow of the current.

Each of the pair of tracking driving coils 9b is wound around the movable member 3 at the positions on right and left sides in symmetrical relation to a shaft center L1 of the balance shaft 6. The optical pickup lens 2 can be moved in the tracking direction through the movable member 3 by feeding the current through the pair of tracking driving coils 9b, and the moving direction can be changed by selectively feeding the current through one of the pair of tracking driving coils 9b.

The balance shaft 6 is formed in a shape of the shaft, one end 6a of the balance shaft 6 is supported by the movable member 3 via a bearing 99, and the balance shaft 6 has a balance weight 6c at the other end 6b. A balancing middle portion 6d of the balance shaft is oscillatably journaled in the fixing member 5 by a gimbal mechanism 90. It will be appreciated that the balance shaft 6 is hollow or the balance shaft 6 is not hollow. Further, it will be appreciated that the balance shaft 6 is made of metal, reinforced plastic, a material in which a metal is coated with reinforced plastic, or the like.

As shown in Fig. 5 and Fig. 6, a spherical portion 6a1 is formed on the one side of the balance shaft 6 viewing from the direction of the shaft, and also is formed into the square shape viewing from the direction of right angle to the shaft. It will be appreciated that the bearing 99 is formed into the movable member 3 or formed separately and furnished into the movable member 3. A straight portion 99a to which the spherical portion 6a1 is touched viewing from the direction of the shaft is formed on four positions respectively in the bearing 99. Said straight portion 99a is point-touched to spherical portion 6a1 which is square shaped viewing from the direction of right angle to the shaft on four positions respectively, an oscillation of the movable member can be performed in such a manner that the movable member 3 is restricted movement thereof around the balance shaft 6 by the bearing, the movement of the optical pickup lens could be controlled in a high accurate and the moment of inertia caused by the external vibration and impact can be balanced by the balance shaft.

The gimbal mechanism 90 is driven about two axes (Y axis and Z axis). As shown in Figs. 3 and 4, the gimbal mechanism 90 has an inner ring 91 and an outer ring 92. The balance shaft 6 is inserted through the inner ring 91. The inner ring 91 is supported by the balance shaft 6, while front ends of supporting shafts 93 and 93 which are provided at symmetrical positions about the balance shaft 6 make a point contact with depression portions 91a and 91a of an inner wall of the inner ring 91 respectively. In the inner ring 91, supporting shafts 94 and 94 are provided at the positions orthogonal to the supporting shafts 93 and 93. The outer ring 92 is supported by the inner ring 91 while the front ends of the supporting shafts 94 and 94 make a point contact with depression portions 92a and 92a of the inner wall of the outer ring 92 respectively.

Thus, the resistance to oscillation of the balance shaft 6 is small and the highly accurate balance can be performed in such a manner that the balance shaft 6 is oscillatably journaled in the fixing member 5 by the gimbal mechanism 30 which is driven about two axes (Y axis and Z axis).

The balance shaft 6 is provided while passing through an opening 9a1 of the focusing driving coil 9a, an opening 10a of the iron core 10, and an opening 8a of the permanent magnet 8. Even if the optical pickup lens 2 is moved, the balance shaft 6 is formed so as not to interfere with the optical pickup lens 2. The balance shaft 6 is formed so that the optical pickup lens 2 and movable member 3 on the side of one end 6a are balanced with the balance weight 6c on the side of the other end 6b while the middle point 6d is a supporting point. A center of gravity of the balance shaft 6 exists in the middle portion 6d.

As shown in Fig. 1, on the side of one end 6a of the balance shaft 6, a weight of the optical pickup lens 2 is W1, the weight of the movable member 3 is X1, and a length between one end 6a and the middle portion 6d is D1. On the side of the other end 6b of the balance shaft 6, the weight of the balance weight 6c is W2, and the length between the other end 6b and the middle portion 6d is D2.

A vibration resistant structure is obtained, the total weight of the weight W1 of the optical pickup lens 2 and the weight X1 of the movable member 3 can be decreased, and the decrease in secondary moment of inertia can be expected, in such a manner that the moment of inertia of weight (W1+X1 ) × length D1 is designed to be equal to the moment of inertia of weight W2 x length D2. For the purpose of miniaturization, the optical pickup lens 2 and the movable member 3 have the structure in which the optical pickup lens 2 and the movable member 3 are rotationally moved about the middle portion 6d, the length D2 between the other end 6b and the middle portion 6d is shortened, the weight W2 is increased, and the method which is driven on the side of the balance weight 6c-is adopted.

Accordingly, the performance of reading information or recording information can be improved with the simple structure in which the moment of inertia caused by the external vibration and impact is balanced by the balance shaft 6, in such a manner that the optical pickup lens driving apparatus 1 comprises the balance shaft 6 in which one end 6a of the balance shaft 6 is connected to the side of the movable member 3, the balance weight 6c is provided at the other end 6b, and the balancing middle portion 6d of the balance shaft 6 is oscillatably journaled in the fixing member 5 though the gimbal mechanism 90, and the optical pickup lens 2 is mounted on the movable member 3.

The movement of optical pickup lens 2 can be controlled on the side of the movable member 3 by the action of the electromagnetic force in such a manner that the permanent magnet 8 is provided on the fixing side and the driving coil 9 is provided in the movable member 3.

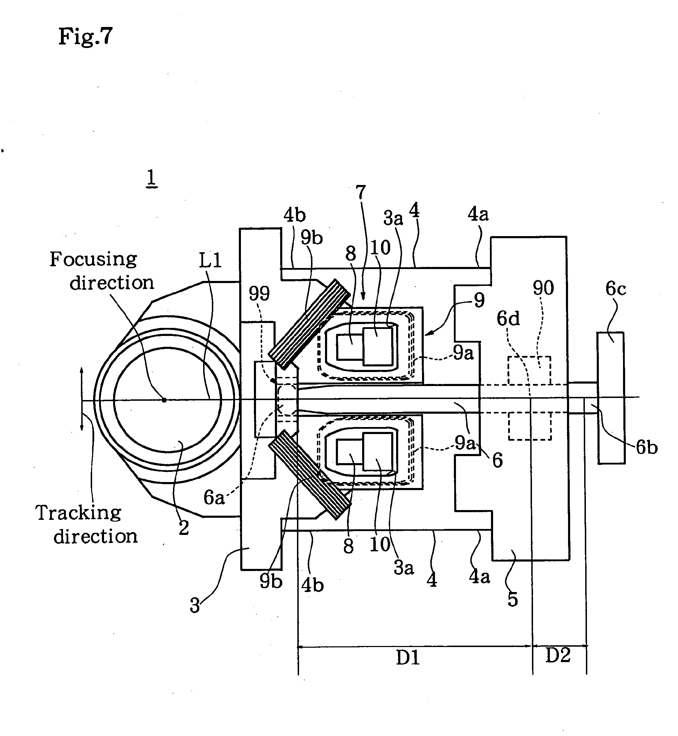

Then, a second embodiment will be described referring to Fig. 7. Fig. 7 is a plan view showing the optical pickup lens driving apparatus.

In the second embodiment, description of the same configuration as the first embodiment shown in Figs. 1 to 6 is omitted by indicating the same configuration by the same reference numeral. The second embodiment differs from the first embodiment in that the balance shaft 6 is provided so as not to penetrate through the focusing driving coil 9a, the iron core 10, and the permanent magnet 8.

The focusing driving coils 9a, the iron cores 10, and the permanent magnets 8 are separately arranged while the focusing driving coil 9a, the iron core 10, and the permanent magnet 8 are divided into the right and left positions which are symmetrical with respect to the shaft center L1 of the balance shaft 6. Each of the pair of focusing driving coils 9a is wound around the movable member 3 along the lengthwise direction of the magnet 8 so that the permanent magnet 8 is located in the center of the focusing driving coil 9a. The optical pickup lens 2 can be moved in the focusing direction through the movable member 3 by feeding the current through the pair of focusing driving coils 9a, and the moving direction can be changed by changing the direction of the flow of the current.

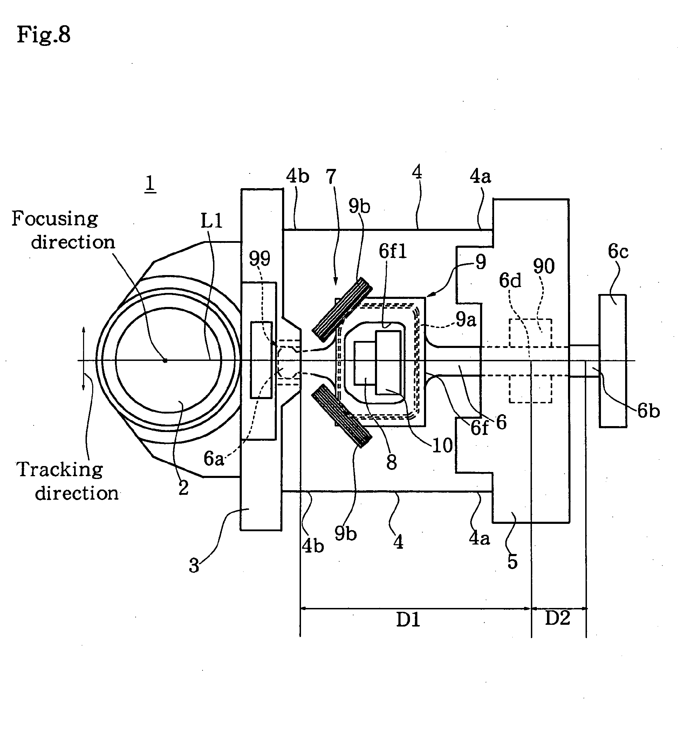

Then, a third embodiment will be described referring to Fig. 8. Fig. 8 is a plan view showing the optical pickup lens driving apparatus. In the third embodiment, the description of the same configuration as the first embodiment shown in Fig. 1 to Fig. 6 is omitted by indicating the same configuration by the same reference numeral. The third embodiment differs from the first embodiment in that the driving coil 9 is provided in the balance shaft 6.

A coil fitting portion 6f is provided in the balance shaft 6, the iron core 10 and the permanent magnet 8 are arranged so as to be located in an opening 6f1 of the coil fitting portion 6f, and the focusing driving coil 9a is wound around the coil fitting portion 6f along the lengthwise direction of the magnet 8 so that the permanent magnet 8 is located in the center of the focusing driving coil 9a. The optical pickup lens 2 can be moved in the focusing direction through the balance shaft 6 by feeding current through the focusing driving coil 9a, and the moving direction can be changed by changing the direction of the flow of the current.

Each of the pair of tracking driving coils 9b is wound around the coil fitting portion 6f at the positions on right and left sides in symmetrical relation to the shaft center L1 of the balance shaft 6. The optical pickup lens 2 can be moved in the tracking direction through the balance shaft 6 by feeding the current through the pair of tracking driving coils 9b, and the moving direction can be changed by selectively feeding the current through one of the pair of tracking driving coils 9b.

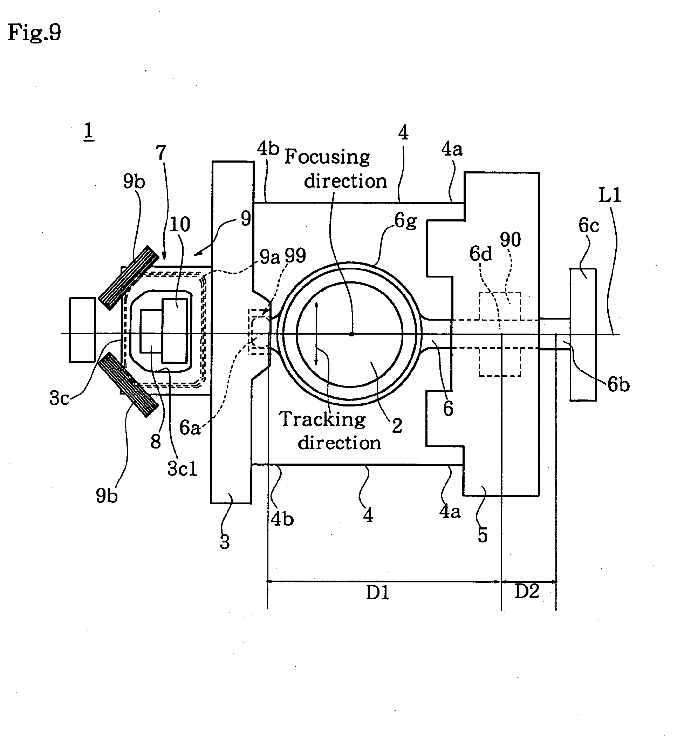

Then, a fourth embodiment will be described referring to Fig. 9. Fig. 9 is a plan view showing the optical pickup lens driving apparatus. In the fourth embodiment, the description of the same configuration as the first embodiment shown in Fig. 1 to Fig. 6 is omitted by indicating the same configuration by the same reference numeral. The fourth embodiment differs from the first embodiment in that the optical pickup lens 2 is provided in the balance shaft 6.

A lens fitting portion 6g is provided in the balance shaft 6, the lens fitting portion 6g is fitted with the optical pickup lens 2, a coil fitting portion 3c is provided in the movable member 3, and the iron core 10 and the permanent magnet 8 are arranged so as to be located in an opening 3c1 of the coil fitting portion 3c. The focusing driving coil 9a is wound around the coil fitting portion 3c along the lengthwise direction of the magnet 8 so that the permanent magnet 8 is located in the center of the focusing driving coil 9a. Each of the pair of tracking driving coils 9b is wound around the coil fitting portion 3c at the positions on right and left sides in symmetrical relation to the shaft center L1 of the balance shaft 6.

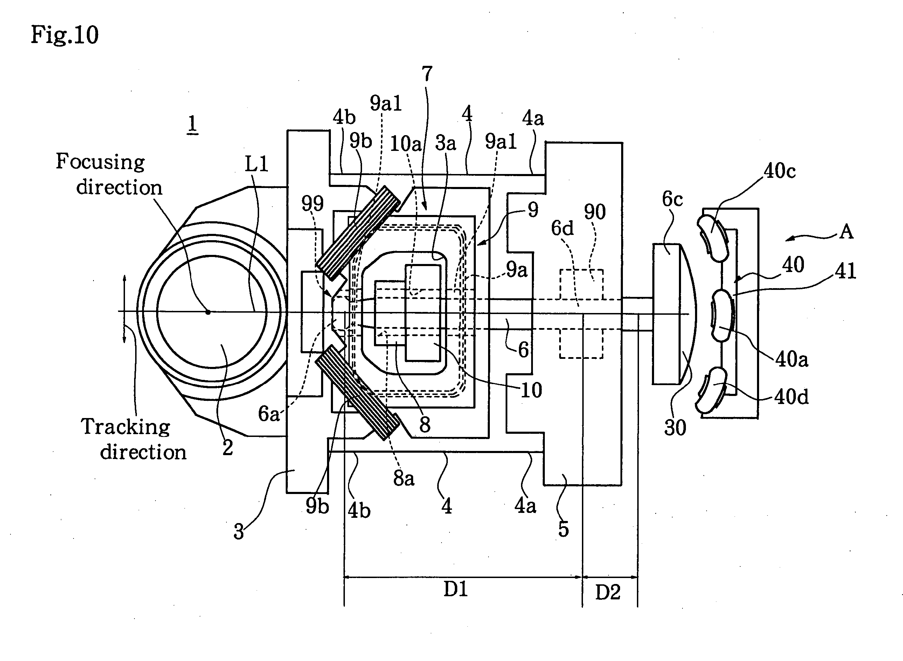

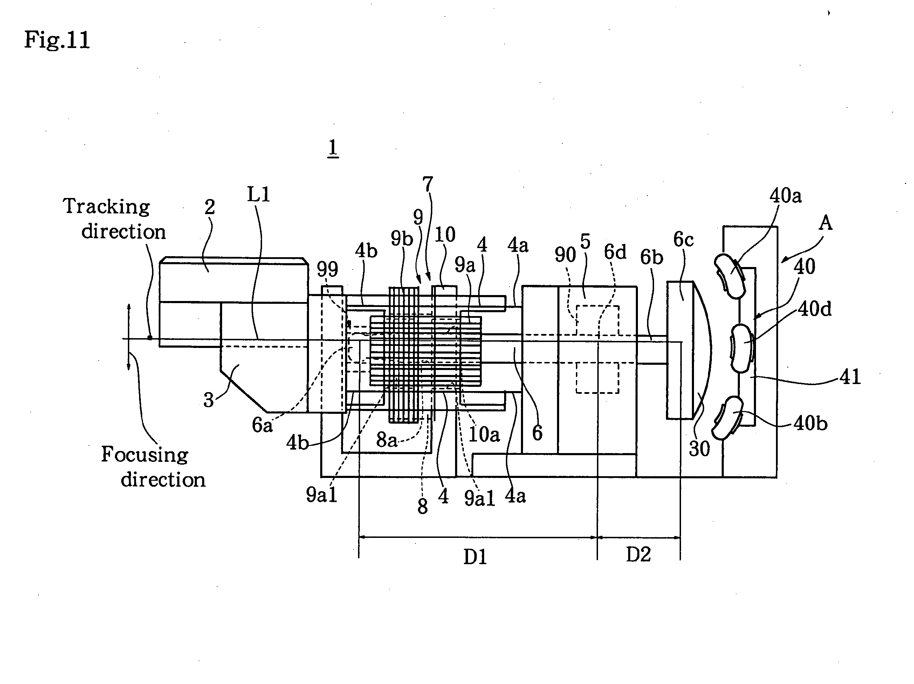

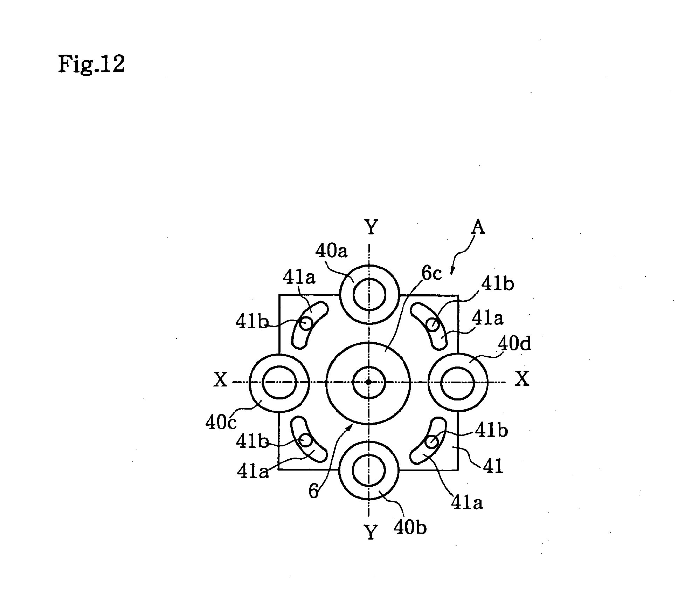

Then, a fifth embodiment will be described referring to Figs. 10 to 12. Fig. 10 is a plan view of the optical pickup lens driving apparatus, Fig. 11 is a side view of the optical pickup lens driving apparatus, and Fig. 12 is a view illustrating driving power and tilt/yawing.

In the fifth embodiment, the description of the same configuration as the first embodiment shown in Fig. 1 to Fig. 6 is omitted by indicating the same configuration by the same reference numeral. The fifth embodiment differs from the first embodiment in that a permanent magnet 30 is provided in a balance weight 6c of the balance shaft 6 and the optical pickup lens driving apparatus 1 includes fine adjustment driving means A which is provided opposite to the permanent magnet 30 and controls the movement of the optical pickup lens 2 in the focusing, tracking, tilt, and yawing directions by the action of the electromagnetic force.

The fine adjustment driving means A has an adjustment driving coil 40 which is arranged in the fixing member 5 with the adjustment driving coil 40 opposite to the permanent magnet 30. The adjustment driving coil 40 includes coils 40a and 40b which perform the adjustment in the focusing direction and coils 40c and 40d which performthe adjustment in the tracking direction. The coils 40a and 40b are located in the upper and lower positions respectively, and the coils 40c and 40d are located in the right and left positions respectively.

As shown in Fig. 12, the coils 40a to 40d of the adjustment driving coil 40 are provided in a position adjusting plate 41. In the position adjusting plate 41, adjusting bolts 41b are inserted through four adjusting guide holes 41a respectively, the adjusting bolts 41b are released to move the position adjusting plate 41 along the adjusting guide holes 41a, and the adjusting bolts can be tightened at a predetermined position to adjust the position.

A driving that adjusts the error can be performed in a vertical direction (Y) and a horizontal direction (X) by driving the balance weight 6c in the vertical direction (Y) and the horizontal direction (X) and by finely adjusting the coil position.

The optical pickup lens driving apparatus 1 can be moved in the focusing direction, the tracking direction, the tilt direction, and the yawing direction in such a manner that the electromagnetic force is activated with the permanent magnet 30 and the coils 40a to 40d of the adjustment driving coil 40 by individually controlling the flow of the current through the coils 40a to 40d of the adjustment driving coil 40.

The fine adjustment driving means A is not limited to the first embodiment, and the fine adjustment driving means A can be also applied to the second embodiment to the fourth embodiment.

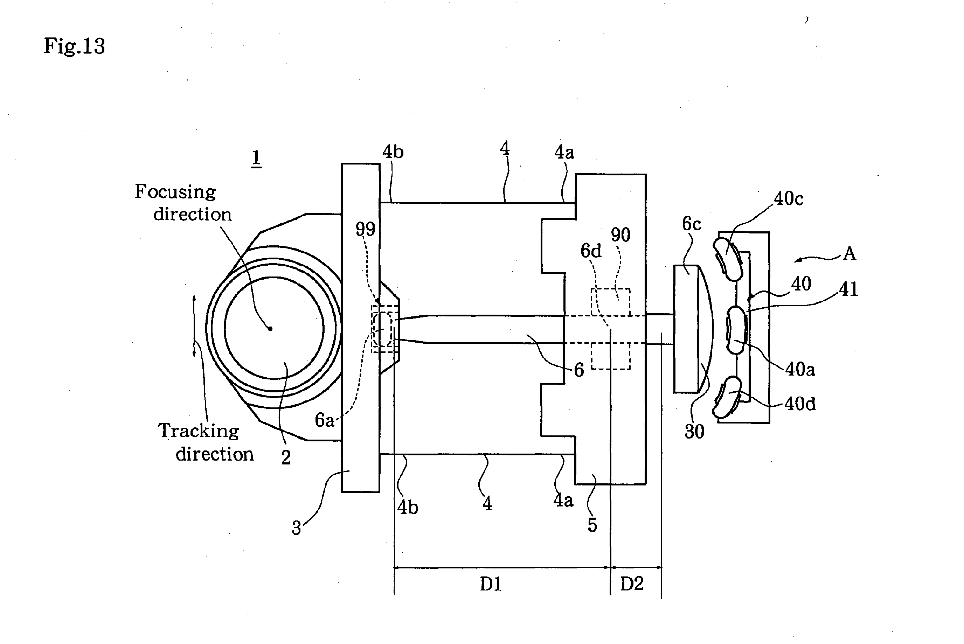

Then, a sixth embodiment will be described referring to Fig. 13. Fig. 13 is a plan view of the optical pickup lens driving apparatus. In the sixth embodiment, the driving means which controls the movement of the optical pickup lens 2 with the permanent magnet 8 and the driving coil 9 is not provided on the side of the movable member 3, but the optical pickup lens driving apparatus 1 is configured to control the movement of the optical pickup lens 2 only by the balance shaft 6. The optical pickup lens 2 is included in the movable member 3 which is supported by the four supporting wires 4.

The driving means has the same configuration as the fine adjustment driving means A shown in Fig. 10. For example, the permanent magnet 30 is moved in the vertical direction by feeding the current through the coils 40a and 40b. This allows the balance shaft 6 to be oscillated while the balance shaft 6 pivots about the middle point 6d, and the optical pickup lens 2 is moved in the focusing direction bymoving the movable member 3 connected to one end 6a of the balance shaft 6 in the vertical direction. The permanent magnet 30 is moved in the horizontal direction by feeding the current through the coils 40c and 40d. This allows the balance shaft 6 to be oscillated with the gimbal mechanism while the balance shaft 6 pivots about the middle point 6d, and the optical pickup lens 2 is moved in the tracking direction by moving the movable member 3 connected to one end 6a of the balance shaft 6 in the horizontal direction.

Thus, the embodiment has the structure in which the movable member 3 is connected to one end 6a of the balance shaft 6, the balance weight 6c is provided at the other end 6b, parallel motion of the movable member 3 is performed by the four supporting wires 4, and the balance shaft 6 is circumferentially moved about a balance hinge of the middle portion 6d, so that the moment of inertia caused by the external vibration and impact can be balanced by the balance shaft 6. Further, the performance of reading information or recording information can be improved with the simple structure by the controlling the movement of the optical pickup lens 2 through the balance shaft 6.

The movement of the optical pickup lens 2 which is activated by the electromagnetic force of the permanent magnet 30 and the driving coil 9 can be controlled in the focusing, tracking, tilt, and yawing directions. Not only the resistance to vibration of the focusing and tracking can be realized by the control of the movement of the optical pickup lens 2, but also the movement of the tilt and the yawing can be controlled.

In the embodiment, although the balance shaft 6 is oscillatably journaled in the fixing member 5 by the gimbal mechanism 90, it will be appreciated that the balance shaft 6 is journaled by a ball bearing or the like instead of the gimbal mechanism 90.

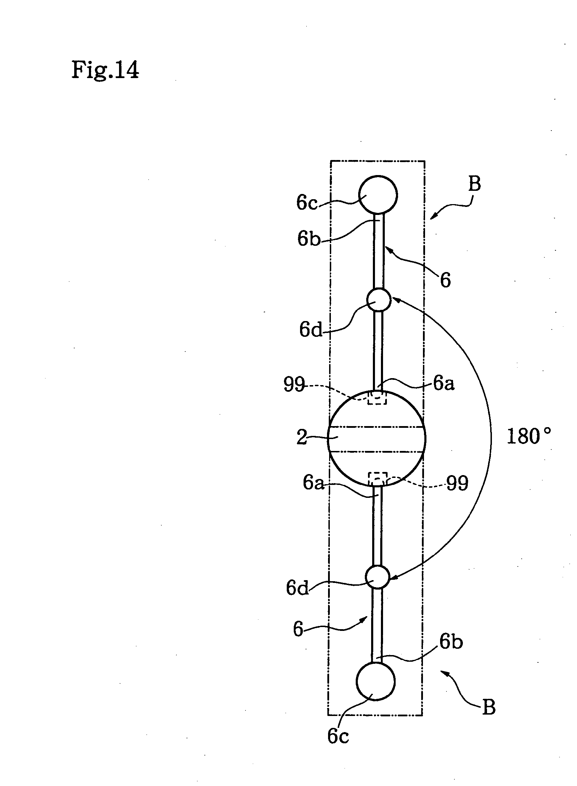

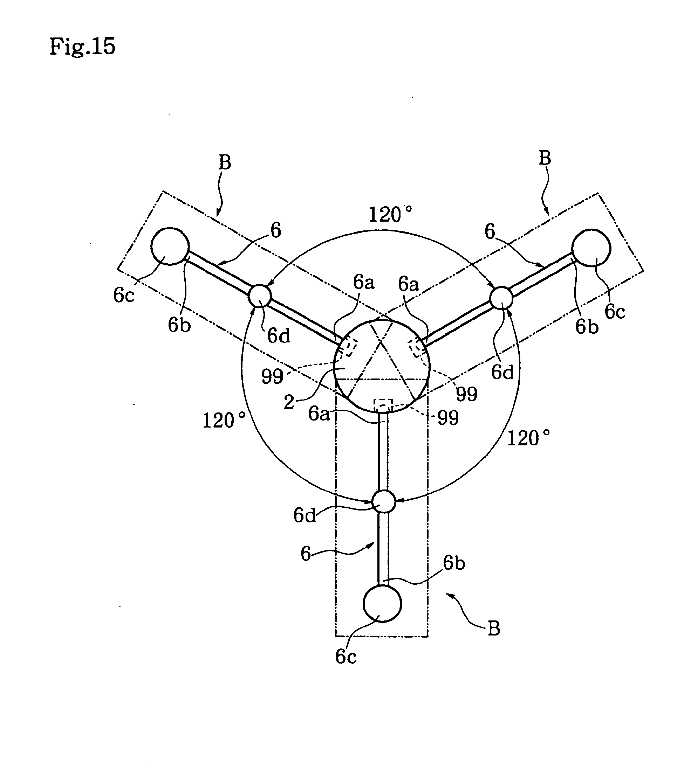

Further, the embodiment is also configured as shown in Figs. 14 and 15. In the embodiment shown in Fig. 14, two driving control units B are arranged about the optical pickup lens 2 at an angle of 180 degrees. In the embodiment shown in Fig. 15, three driving control units B are arranged about the optical pickup lens 2 at an angle of 120 degrees.

As described above, the plurality of driving control units B are arranged about the optical pickup lens 2 at an equal angle, and the optical pickup lens driving apparatus shown in Figs. 1 to 11 includes the plurality of driving control units B. Each of the plurality of driving control units B includes the balance shaft 6 in which the balancing middle portion 6d is oscillatably journaled. In each of the plurality of driving control units B, one end of the balance shaft 6 is connected to the side of the optical pickup lens 2, and the balance weight 6c is provided on the other end of the balance shaft 6.

In the embodiment, the movement of the optical pickup lens driving apparatus could be controlled in a high accurate in such a manner that the one side 6a1 of the balance shaft 99 is supported by the side of the optical pickup lens 2 via the bearing 99, an oscillation of the side of the optical pickup lens 2 can be performed in such a manner that the side of the optical pickup lens is restricted movement thereof around the balance shaft by the bearing. So that the movement of the optical pickup lens could be controlled in a high accurate and the moment of inertia caused by the external vibration and impact can be balanced by the balance shaft.

In the embodiment, the moment of inertia caused by the external vibration and impact can be balanced in such a manner that the plurality of driving control units B are arranged about the optical pickup lens 2 at an equal angle, the movement of the optical pickup lens 2 is controlled by the plurality of driving control units B, and each of the plurality of driving control units B includes the balance shaft. Therefore, the performance of reading information or recording information can be improved with the simple structure.

As shown in each of the embodiments, in the invention, the G sensor can be eliminated and the capacity of the auxiliary memory associated with the G sensor can be decreased. The improvement of the recording density, the improvement of error rate, and the decrease in the electric power consumption can be realized by accurately performing the focusing control and the tracking control. Further, it is expected that the invention is applied to impact-resistant instruments to performprocessing of the large amount of information. Particularly, in the case where the optical pickup lens driving apparatus mounting a blue laser is used for the recording medium having four-fold recording density in DVD for automobile or the like in which the vibration is large, it is expected that the error rate is decreased and cost is reduced when the information recorded on the recording medium having four-fold recording density is read out or the information is recorded.

## Claims

1. An optical pickup lens driving apparatus comprising:
an optical pickup lens;
four supporting wires which movably support a movable member;
a fixing member in which said four supporting wires are supported;
driving means which controls movement of said optical pickup lens by action of electromagnetic force;
a balance shaft in which one end of said balance shaft is connected to said movable member, a balance weight is provided at the other end, and a balancing middle portion of said balance shaft is oscillatably journaled in said fixing member,
wherein said optical pickup lens is mounted on said movable member.

2. An optical pickup lens driving apparatus according to claim 1, wherein said driving means has a permanent magnet and a driving coil which generate the electromagnetic force, said permanent magnet is provided on a fixing side, and said driving coil is provided in said movable member.

3. An optical pickup lens driving apparatus according to claim 1, wherein said driving means has the permanent magnet and the driving coil which generate the electromagnetic force, said permanent magnet is provided on a fixing side, and said driving coil is provided in said balance shaft.

4. An optical pickup lens driving apparatus according to claim 1, further comprising;
a permanent magnet which is provided in said balance weight of said balance shaft, and
fine adjustment means which is provided opposite to said permanent magnet, said fine adjustment means controlling the movement of said optical pickup lens in focusing, tracking, tilt, and yawing directions.

5. An optical pickup lens driving apparatus according to claim 1, wherein said balance shaft is oscillatably journaled in said fixing member by a gimbal mechanism.

6. An optical pickup lens driving apparatus according to claim 1, wherein one side of said balance shaft is supported by said movable member via a bearing.

7. An optical pickup lens driving apparatus according to claim 6, wherein an oscillation of said movable member can be performed in such a manner that said movable member is restricted movement thereof around said balance shaft by said bearing.

8. An optical pickup lens driving apparatus comprising:
an optical pickup lens;
four supporting wires which movably support a movable member;
a fixing member in which said four supporting wires are supported;
driving means which controls movement of said optical pickup lens by action of electromagnetic force;
a balance shaft in which one end of said balance shaft is connected to said movable member, a balance weight is provided at the other end, and a balancing middle portion of said balance shaft is oscillatably journaled in said fixing member,
wherein said optical pickup lens is mounted on said balance shaft.

9. An optical pickup lens driving apparatus according to claim 8, wherein said driving means has a permanent magnet and a driving coil which generate the electromagnetic force, said permanent magnet is provided on a fixing side, and said driving coil is provided in said movable member.

10. An optical pickup lens driving apparatus according to claim 8, wherein said driving means has the permanent magnet and the driving coil which generate the electromagnetic force, said permanent magnet is provided on a fixing side, and said driving coil is provided in said balance shaft.

11. An optical pickup lens driving apparatus according to claim 8, further comprising;
a permanent magnet which is provided in said balance weight of said balance shaft, and
fine adjustment means which is provided opposite to said permanent magnet, said fine adjustment means controlling the movement of said optical pickup lens in focusing, tracking, tilt, and yawing directions.

12. An optical pickup lens driving apparatus according to claim 8, wherein said balance shaft is oscillatably journaled in said fixing member by a gimbal mechanism

13. An optical pickup lens driving apparatus according to claim 8, wherein one side of said balance shaft is supported by said movable member via a bearing.

14. An optical pickup lens driving apparatus according to claim 13, wherein an oscillation of said movable member can be performed in such a manner that said movable member is restricted movement thereof around said balance shaft by said bearing.

15. An optical pickup lens driving apparatus comprising:
an optical pickup lens;
a movable member mounting an optical pickup lens;
four supporting wires which movably support said movable member;
a fixing member in which said four supporting wires are supported;
a balance shaft in which one end of said balance shaft is connected to said movable member, a balance weight is provided at the other end, and a balancing middle portion of said balance shaft is oscillatably journaled in said fixing member; and
driving means which controls movement of said optical pickup lens through said balance shaft by action of electromagnetic force.

16. An optical pickup lens driving apparatus according to claim 15, wherein said driving means includes a permanent magnet which is provided in said balance weight of said balance shaft and a driving coil which is provided in said fixing member while said driving coil is opposite to said permanent magnet.

17. An optical pickup lens driving apparatus according to claim 15, wherein said balance shaft is oscillatably journaled in said fixing member by a gimbal mechanism.

18. An optical pickup lens driving apparatus according to claim 15, wherein one side of said balance shaft is supported by said movable member via a bearing.

19. An optical pickup lens driving apparatus according to claim 18, wherein an oscillation of said movable member can be performed in such a manner that said movable member is restricted movement thereof around said balance shaft by said bearing.

20. An optical pickup lens driving apparatus comprising:
an optical pickup lens;
a plurality of driving control units which control movement of said optical pickup lens, said plurality of driving control units being arranged about said optical pickup lens at an equal angle; and
a balance shaft which is included in each of said plurality of driving control units, one end of said balance shaft being connected to a side of said optical pickup lens, a balance weight being provided at the other end of said balance shaft, and a balancing middle portion of said balance shaft being oscillatably journaled in said fixing member.

21. An optical pickup lens driving apparatus according to claim 20, wherein one side of said balance shaft is supported by said side of the optical pickup lens via a bearing.

22. An optical pickup lens driving apparatus according to claim 21, wherein an oscillation said side of the optical pickup lens can be performed in such a manner that said side of the optical pickup lens is restricted movement thereof around said balance shaft by said bearing.
